# EUROPÄISCHE PATENTSCHRIFT

(11) **EP 0 291 566 B1**
(45) Veröffentlichungstag und Bekanntmachung des Hinweises auf die Patenterteilung: **09.02.1994**
(21) Anmeldenummer: 87112710.6
(22) Anmeldetag: 01.09.1987
(51) Int. Cl.: A23L 1/168

(54) **Verfahren zur Herstellung eines schnellkochenden körnigen Reisprodukts**
Process for the preparation of a quick-cooking granular rice product
Procédé de préparation d'un produit à base de riz granuleux à cuisson rapide

(30) Priorität: 16.05.1987 DE 3716467
(43) Veröffentlichungstag der Anmeldung: 23.11.1988
(73) Patentinhaber: intech Dr. Jodlbauer Gesellschaft für Innovation und Technologie mbH, D-21107 Hamburg (DE)
(72) Erfinder: Jodlbauer, Heinz D., Dr., D-1000 Berlin 21 (DE)
(74) Vertreter: Patentanwälte Hauck, Graalfs, Wehnert, Döring, Siemons

(56) Entgegenhaltungen:
- CA-A- 1 028 194
- FR-A- 1 186 324
- FR-A- 2 120 359
- GB-A- 1 225 070
- GB-A- 2 145 319
- OA-A- 5 318

## Beschreibung

Die Erfindung betrifft ein Verfahren zur Herstellung eines schnellkochenden, körnigen Reisproduktes aus einer Bruchreis enthaltenden Mischung.

Zur Gewinnung von poliertem Reis, auch als Tafelreis oder Weißreis bezeichnet, wird Rohreis zunächst von unerwünschten Besatzbestandteilen befreit, und die entspelzten Körner werden nach der Dicke sortiert. Das verbessert die Schälwirkung des Unterläuferschälganges und vermindert die Bruchbildung beim Schälen. Das Schälprodukt läuft über Sortiersiebe, die Schälmehl und Bruchreis abziehen. Danach werden die Spelzen abgesaugt. Die Trennung ungeschälter und geschälter Körner (Braunreis) erfolgt durch die sogenannten Paddyauslesetische. Der Paddyreis muß nochmals einen Schälgang durchlaufen, während der Braunreis zum Schleifgang geführt wird.

Das Schleifen erfolgt an einem mit Schmirgel belegten Kegel, der in einem feststehenden Drahtmantel rotiert. Bis zu vier solcher Schleifkegel muß der Reis durchlaufen, bis das Silberhäutchen, das ist die Frucht- und Samenschale, aber auch Keimlinge und Aleuronschicht abgerieben und durch den Drahtmantel jeweils abgesaugt sind.

Um letzte Reste von den Körnern zu entfernen und ihnen ein glattes Aussehen zu geben, wird ein Polierkegel nachgeschaltet, der statt mit Schmirgel mit Lederstreifen belegt ist.- Bei diesem Polieren fällt das sogenannte Poliermehl an. Schließlich wird der erhaltene Weißreis durch Sortiersiebe vom Bruch befreit und nach der Größe sortiert.

In dem vorstehend geschilderten Verfahren der Reismühle wird bekanntlich die Hauptmenge der im Vollreiskorn befindlichen Vitamine und Mineralstoffe mit dem Silberhäutchen und der Aleuronschicht entfernt.

Als ungefähre Ausbeutesätze bei der Verarbeitung von Rohreis zu Tafelreis gelten folgende Zahlen: 45 bis 55 % an Weißreis (Tafelreis), 9 bis 17 % Bruchreis, 7 bis 12 % Schäl- und Schleifmehl, 20 bis 24 % Spelzen und sonstige Abfälle.

In den Mahlprodukten ist der Anteil an Vitaminen wesentlich höher als im Kern.

Ähnliches gilt auch für die Mineralstoffe. Vom Gesamtaschegehalt des Braunreises enthält der Weißreis nur noch 28 %, der Keim 10 %, aber das Schleifmehl 51 %.

Etwa die Hälfte der im Braunreis vorhandenen Gesamtmenge an Phosphor entfällt auf die "Schale", auf den Kern etwa 8 % und auf das Endosperm etwa 42 %.

Die Randschichten des Braunreises sind ebenso wie der Keim protein- und fettreich, so daß der Gehalt an diesen beiden Stoffen im Schleifmehl gegenüber dem Weißreis etwa doppelt so hoch (Rohprotein) bzw. um ein Vielfaches höher (Rohfett) liegt. Was die Aminosäurenzusammensetzung betrifft, so liegt im Schleifmehl der Anteil an Cystin, Glycin, Histidin und besonders an Lysin höher als im Weißreis, der Anteil an Glutaminsäure, Leucin und Phenylalanin dagegen niedriger.

Vollreiskörner sind dem Vollreis gleichzusetzen.

Aus den voranstehenden Darlegungen ist ersichtlich, daß die hinsichtlich einer gesunden Ernährung am höchsten einzustufenden Bestandteile des ungeschälten Reiskornes nicht mehr vorhanden sind, wenn der Reis für die menschliche Ernährung eingesetzt wird, da insbesondere lysinreiche Eiweiße, die Vitamine und die Mineralstoffe durch die Reisbehandlung abgetrennt werden.

Die durch das Schälen, Schleifen und Polieren des Rohreises anfallenden Bestandteile werden bisher als Futtermittel eingesetzt (siehe das Fachbuch: Kurt Fischer, Die Reismüllerei, Verlag: Moritz Schäfer, Detmold, Seite 83). Bruchreis wird auf Grieß und Stärke verarbeitet.

Aus der JP-A2 59-192047 (JP-Z. Patent Abstracts of Japan, Vol. 9, 1985, Nr. 52, C-269) ist bekannt, die beim Vermahlen von Getreide anfallende Kleie einer bestimmten Teilchengrößenverteilung mit Wasser vermischt zu bindemittelfreien Pellets strangzupressen. Ein solches Vorgehen ist mit den bei der Verarbeitung von Rohreis zu Tafelreis als Nebenprodukte anfallenden Reisbestandteilen nicht möglich, da das Wasserbindevermögen viel zu gering ist.

In der JP-A2 60-66957 (dito Nr. 196, C-297) wird vorgeschlagen, bestimmte beim Polieren von Reis anfallende Fraktionen zu rösten, das braune Pulver zu granulieren, im Fließbett zu trocknen und mit einem Binder einzusprühen. Dieses Verfahren ist umständlich; es wird nur ein bestimmter Teil der bei der Verarbeitung von Rohreis anfallenden Nebenprodukte verwendet, so daß das fertige Produkt bei weitem nicht alle wertvollen Bestandteile enthält. Und schließlich enthält das Produkt zusätzlich ein Bindemittel.

In der DE-OS 28 37 294 ist die Herstellung eines Nahrungsmittels niedrigen Kaloriengehaltes auf der Basis von Kleie beschrieben. Kleie, insbesondere Weizenkleie wird mit Gluten und Weizenmehl vermischt, Wasser zugesetzt und das resultierende Gemisch durch einen Zweischneckenextruder geschickt, in welchem die Temperatur von 80 auf 220 °C ansteigt. Bei dieser Temperatur werden die Mischungsbestandteile stark abgebaut, so daß der Nährwert des Endprodukts zwangsläufig gering ist. Außerdem sind die Ausgangsmaterialien nicht mit Bruchreis, Schäl-, Schleif- und Poliermehl von Reis vergleichbar.

Aus der GB-A-1 225 070 ist ein Vefahren zur Herstellung eines schnellkochenden, körnigen Reisproduktes aus einer Bruchreis enthaltenden Mischung bekannt. Bei diesem bekannten Verfahren wird allein Bruchreis eingesetzt, der zusätzlich mit einem Nährstoff versetzt wird, um so den erforderlichen Nährwert dem fertigen Produkt zur Verfügung zu stellen. Das bekannte Verfahren macht eine Dampfbehandlung erforderlich, die unzweifelhaft zumindest zu einer teilweisen Zerstörung der Vitamine und zu einer teilweisen Hydrolyse der Aminosäuren führt.

Aus der OA-A-5 318 ist ein Verfahren zur Herstellung eines schnellkochenden, körnigen Reisproduktes bekannt, bei dem als Ausgangsprodukt Bruchreis bzw. weißer, bereits polierter Bruchreis eingesetzt wird. Diese Substanz wird einer zweimaligen Wasserbehandlung unterzogen, die zwangsläufig zu einer Verringerung der wasserlöslichen Nährstoffe führt. Bei einem vergleichbaren, aus der CA-A-1 028 194 bekannten Verfahren werden zum Aufschluß der in den Ausgangsmaterialien enthaltenen Stärke diese Ausgangsmaterialien unter Wärmeeinwirkung geliert und teilweise zusätzlich mit Wasserdampf behandelt, so daß bei dieser Wasserdampfextraktion ebenfalls wertvolle Bestandteile verlorengehen.

Der Erfindung liegt die Aufgabe zugrunde, ein besonders einfaches und schonendes Verfahren zur Herstellung eines Reisproduktes zur Verfügung zu stellen, das die wertvollen Substanzen von Rohreis enthält, die bisher bei der Tafelreisgewinnung als Nebenprodukte für die menschliche Ernährung verlorengingen, das Aussehen von Tafelreis besitzt und zum Garwerden nur eine sehr kurze Kochzeit benötigt.

Diese Aufgabe wird erfindungsgemäß durch ein Verfahren mit den kennzeichnenden Merkmalen des Patentanspruchs 1 gelöst.

Damit die vorhandenen Nährstoffe während der Herstellung des eigentlichen Reisproduktes nicht verlorengehen bzw. zerstört werden, sieht das erfindungsgemäße Verfahren vor, daß der erforderliche Aufschluß der in den Nebenprodukten enthaltenen Stärke unter extrem schonenden Bedingungen im Extruder vorgenommen wird. So erfolgt der Aufschluß und damit die notwendige Verkleisterung der Ausgangsprodukte in einem Einschneckenextruder, d. h. in einem einzigen Extruderschritt, unter Einhaltung von einer Mantel Temperatur auf Werte zwischen 40 und 60°C und einer Kompression 2:1. Es erfolgt ein geringfügiger Wasserzusatz, wodurch eine oxidative Zerstörung und Extraktion der Nährstoffe verhindert wird. Es wird ein trockenes Endprodukt erhalten.

Das erfindungsgemäße Verfahren stellt somit eine wesentliche Vereinfachung gegenüber dem Stand der Technik dar, da hierbei im Gegensatz zu einer Vielzahl von Schritten beim Stand der Technik ein einziger Extruderschritt Anwendung findet.

Weiterbildungen des erfindungsgemäßen Verfahrens gehen aus den Unteransprüchen hervor.

Die Erfindung betrifft ferner ein nach dem vorstehend beschriebenen Verfahren hergestelltes Reisprodukt.

Es wurde festgestellt, daß sich alle Nebenproduktbestandteile, Schälmehl, Schleifmehl, Poliermehl und Bruchreis, die bei der Verarbeitung von Rohreis zu Tafelreis (Weißreis) anfallen, zusammen zu einem Produkt verarbeiten lassen, das die wertvollen Bestandteile, die im Rohreis, insbesondere in den Randschichten von Braunreis enthalten sind, unverändert enthält. Das Produkt hat die Form, die der von Tafelreis ähnlich ist, und es läßt sich in kurzer Zeit, beispielsweise 3 bis 4 Minuten, garkochen.

In einzelnen wird bei dem erfindungsgemäßen Verfahren so vorgegangen, daß man die Reis-Nebenproduktbestandteile mit einer bestimmten Menge Wasser vermischt und die Mischung durch einen Einschneckenextruder schickt, in welchem die Mischung in einem bestimmten Ausmaß komprimiert und von Raumtemperatur an der Einfüllöffung des Extruders auf etwa 110°C an der Austruttsdüse gebracht wird. Hierdurch wird Quellung, teilweiser Aufschluß und schließlich Verkleisterung der in den Nebenproduktbestandteilen enthaltenen Stärke bewirkt, wodurch die erforderliche Kohäsion gewährleistet wird. Die Temperatur ist hoch genug, so daß teilweise Aufschluß und Verkleisterung stattfinden kann, andererseits aber niedrig genug, so daß die Gefahr des Abbaus von Kohlehydraten und Eiweißen oder der Zerstörung des Vitamin B1 nicht oder nur minimal besteht. Außerdem verdampft das Wasser, so daß ein trockenes Produkt erhalten wird.

Daß das Produkt in Form von Körnern etwa von der Größe des Tafelreises anfällt, wird auf einfache Weise dadurch erreicht, daß als Extruderdüse eine Viellochdüse verwendet wird, deren Löcher den Durchmesser der gewünschten Korndicke, z.B. von 1 bis 5 mm, haben. Die aus der Extruderdüse austretenden dünnen Stränge kühlen sich rasch ab und werden dann auf die gewünschte Kornlänge von 5 bis 10 mm geschnitten. Bevorzugt wird eine Korngröße von 1,5 mm Dicke und 8 mm Länge.

Nach einer bevorzugten Ausführungsform der Erfindung wird das Produkt zusätrlich nachgetrocket, so daß der Feuchtigkeitsgehalt maximal 6 Gew.-% beträgt. Danach ist das Produkt über lange Zeit haltbar. Ist das Produkt aber zum alsbaldigen Gebrauch bestimmt, so kann das Nachtrocknen unterbleiben. Auch eine Kühlung des halbfertigen Produkts, beispielsweise als Halbkonserve, ist möglich.

Nach einer anderen bevorzugten Ausführungsform wird dem Gemisch von den Nebenproduktbestandteilen und Wasser Salz und/oder Currygewürz oder ein anderes Gewürz zugegeben. Man erhält dann ein besonders wohlschmeckendes Reisprodukt, dem keine geschmacksverbessernden Mittel nachträglich zugesetzt werden brauchen.

Die Nebenproduktbestandteile werden mit so viel Wasser vermischt, wie für die Quellung der teilweisen oder vollständigin Verkleisterung erforderlich ist. Die von der Reismühle kommenden Nebenproduktbestandteile haben in der Regel einen Feuchtigkeitsgehalt von 8 bis 14 Gew.-%. Unter dieser Voraussetzung sind für 100 kg Nebenproduktbestandteile 12 bis 24 kg Wasser erforderlich.

Bei einem Feuchtigkeitsgehalt von z.B. 11 Gew.-% werden für 100 kg Nebenproduktbestandteile 18 kg Wasser benötigt.

Das Mischen kann in irgendeinem bekannten Mischer, wie einem Paddelmischer, einem mit Magnetrührer versehenen Mischer oder einem Trommelmischer vorgenommen werden.

Der Schneckenextruder, der verwendet wird, ist ein Einschneckenextruder. Er ist beheizbar. Schneckenlänge und Kompression hängen natürlich von der Größe der Einsatzmenge ab. Bei einer Gesamteinsatzmenge von etwa 120 kg (Nebenproduktbestandteile plus Wasser) hat sich ein Schneckenextruder mit einer Schnecke eines Durchmessers von 90 mm, einer Schneckenlänge von 1500 mm und einer Kompression von 2 : 1 als zweckmäßig erwiesen. Vorzugsweise beträgt die Kompression im ersten Drittel von 100 Vol.-% auf 75 Vol.-% und im zweiten und dritten Drittel von 75 auf 50 %. Es genügt, die Extruderwand auf eine relativ niedrige Temperatur einzustellen, z.B. auf 40 bis 60 °C. Da sich die Masse infolge der Kompression erwärmt (in Abhängigkeit von der Schneckendrehzahl), resultiert eine Masseremperatur an der Austrittsdüse von 100 bis 110 °C. Der Temperaturanstieg begünstigt Aufschluß und Verkleisterung und das Verdampfen des Wassers, so daß man ein weitgehend trockenes Produkt erhält.

Die aus der Viellochdüse austretenden Stränge werden dann zu Körnern der gewünschten Länge geschnitten. Hierfür kann man ein rotierendes Rundmesser oder in Takt betätigte Fallmesser oder eine andere geeignete Schneidvorrichtung verwenden.

Wenn das erhaltene Reisprodukt in Körnerform nachgetrocknet wird, um die Haltbarkeit noch zu verbessern, so kann dies nach irgendeiner bekannten Methode vorgenommen werden, z.B. in einem Warmluftstrom, mittels IR-Bestrahlung oder dergleichen. Auch Mikrowellenbehandlung zur Oberflächenabtrocknung oder Schichttrocknung des ausgepreßten Korns ist vorteilhaft. Die Reiskörner können auch erneut gezielt befeuchtet werden (Eindringtiefe z.B. 2 mm) und anschließend einer hohen Dosis Mikrowellen ausgesetzt werden, um eine Trocknung vorgegebener Tiefe zu erzielen und z. B. einen gewünschten Bräunungseffekt herbeizuführen. Eine weitere Möglichkeit besteht darin, das Reiskorn mit einer konzentrierten Zuckerlösung zu besprühen und somit nach der Mikrowellenbehandlung ein Reiskorn mit Zuckerglasur zu erhalten. Ein derartiges Produkt ist z.B. für die Herstellung von Milchreis besonders geeignet.

Das erhaltene körnige Reisprodukt läßt sich wie Tafelreis in Wasser von etwa 100 °C garen, wobei das Produkt aber bereits nach 3 bis 4 Minuten gar ist. Die Erfindung wird nun noch anhand eines Ausführungsbeispiels erläutert.

In einen Paddelmischer wurden eingefüllt:
100 kg einer von der Reismühle kommenden Mischung aus etwa 50 kg Schäl-, Schleif- oder Poliermehl, jeweils etwa zu einem Drittel, und 50 kg Bruchreis mit einem Feuchtigkeitsgehalt von etwa 11 %,
18 l Wasser mit einer Temperatur von 18 °C,
1,5 kg Salz,
2,0 kg Currygewürz.

Obige Bestandteile wurden innig vermischt und anschließend in einen Einschneckenextruder mit einer Schnecke von 90 mm Durchmesser und einer Schneckenlänge von 1.500 mm eingegeben. Das Schneckengangvolumen verminderte sich im ersten Drittel der Schnecke von 100 % auf etwa 75 % und im zweiten und letzten Drittel auf etwa 50 % des Eingangsvolumens, so daß sich im Extruder ein zunehmender Druck hinsichtlich der Austrittsdüse aufbaute. Die Massetemperatur vor der Austrittsdüse lag bei 110°C.

Die Düse wies eine Vielzahl von runden Düsenbohrungen mit einem Durchmesser von 1 ,2 mm auf. Vor der Düse ist ein rotierendes Schneidmesser angeordnet, welches die aus den Düsenbohrungen austretenden Stränge jeweils zu einer Länge von etwa 7 bis 10 mm ablängte.

Die erhaltenen länglichen, reisähnlichen Körper wurden mittels Warmluft auf einen Feuchtigkeitsgehalt von ca. 6 % getrocknet, um die Wasseraktivität des kornartigen Produktes herabzusetzen und somit höhere Haltbarkeit zu gewährleisten.

Der Trocknungsvorgang kann je nach gewünschtem Feuchtigkeitsgehalt variiert werden, ist aber entbehrlich.

Es wurde ein sehr wohlschmeckendes Produkt erhalten, welches den typischen Curry-Reisgeschmack aufwies, welches ernährungsphysiologisch eine hohe Qualität besaß und welches aus einem sehr preiswerten Rohstoff hergestellt wurde.

## Patentansprüche

1. Verfahren zur Herstellung eines schnellkochenden, körnigen Reisproduktes aus einer Bruchreis enthaltenden Mischung, dadurch gekennzeichnet, daß man die Mischung aus dem Bruchreis und den bei der Verarbeitung von Rohreis als Nebenprodukt anfallenden Reisbestandteilen Schälmehl, Schleifmehl und Poliermehl mit einem durchschnittlichen Feuchtigkeitsgehalt von 8 bis 14 Gew.% und einem dem Rohreis bezüglich seiner wertvollen Substanzen entsprechenden Mischungsverhältnis herstellt, daß man 100 Gew.% dieser Mischung mit 12 bis 24 Gew.% Wasser innig vermischt, und daß man die Mischung zum teilweisen Aufschließen und Verkleistern durch einen Einschneckenextruder schickt, dessen Manteltemperatur auf Werte zwischen 40 und 60° ( eingestellt ist und dessen Kompression 2:1 beträgt, wobei man die Mischung durch eine einen Lochdurchmesser von 1 bis 5 mm aufweisende Viellochdüse extrudiert und die erhaltenen trockenen Stränge auf die gewünschte Kornlänge schneidet.

2. Verfahren nach Anspruch 1, dadurch gekennzeichnet, daß man eine Mischung aus 100 Gewichtsteilen der Nebenproduktbestandteile eines Feuchtigkeitsgehaltes von 11 Gew.% und 18 Gewichtsteile Wasser mit einer Temperatur von 18° C verwendet.

3. Verfahren nach Anspruch 1 oder 2, dadurch gekennzeichnet, daß man der Mischung und dem Wasser noch 0,1 bis 0,3 Gew.% Salz und/oder Currygewürz zumischt.

4. Verfahren nach einem der vorangehenden Ansprüche, dadurch gekennzeichnet, daß man die Temperatur der Masse an der Viellochdüse zwischen 100° C und 110° C hält.

5. Verfahren nach einem der vorangehenden Ansprüche, dadurch gekennzeichnet, daß man einen Einschneckenextruder mit einer Schnecke eines Durchmessers von 90 mm und einer Länge von 1.500 mm verwendet, wobei sich das Schneckengangvolumen im ersten Drittel von 100 auf 75 % und im zweiten und dritten Drittel auf 50 % des Ausgangsvolumens verringert.

6. Verfahren nach einem der vorangehenden Ansprüche, dadurch gekennzeichnet, daß man das erhaltene körnige Produkt auf einen Feuchtigkeitsgehalt von maximal 6 Gew.% nachtrocknet.

7. Verfahren nach Anspruch 6, dadurch gekennzeichnet, daß man vor der Nachtrocknung eine gezielte Befeuchtung vornimmt.

8. Verfahren nach Anspruch 7, dadurch gekennzeichnet, daß man vor der Nachtrocknung eine Befeuchtung mit einer Zuckerlösung vornimmt.

9. Schnellkochendes körniges Reisprodukt erhältlich durch das Verfahren gemäß einem der vorangehenden Ansprüche.

## Claims

1. Method of producing a fast-cooking granular rice product from a mixture containing broken rice, characterized in that the mixture is prepared from the broken rice and rice components obtained as a by-product in the processing of raw rice which comprise husking flour, scouring flour, and polishing flour, the mixture having an average moisture contents in the range of 8 to 14 % by weight and comprising a mixing ratio which corresponds to the raw rice with respect to its valuable components, that 100 % by weight of the mixture is well mixed with 12 to 24 % by weight of water, and that the mixture is passed through a single-worm extruder for partial breaking-down and agglutination, the surface temperature thereof being between 40 to 60°C and the compression thereof being 2:1, with the mixture being extruded through a multi-hole nozzle with a hole diameter of 1 to 5 mm, and the dried ropes obtained being cut to the granule length desired.

2. Method according to claim 1, characterized in that a mixture of 100 % by weight of the by-product components with a moisture contents of 11 % by weight and 18 % by weight of water at a temperature of 18°C is used.

3. Method according to claim 1 or 2, characterized in that 0.1 to 0.3 % by weight of salt and/or curry are added to the mixture and the water.

4. Method according to one of the preceding claims, characterized in that the temperature of the mass at the multi-hole nozzle is maintained between 100 and 110°C.

5. Method according to one of the preceding claims, characterized in that a single-worm extruder including a worm being 90 mm in diameter and 1500 mm in length is used, the spiral volume in the first third being reduced from 100 to 75 % and in the second and third third to 50 % of the original volume.

6. Method according to one of the preceding claims, characterized in that the granular product obtained is post-dried to a moisture contents of maximally 6 % by weight.

7. Method according to claim 6, characterized in that a specific humidification is performed prior to the post-drying.

8. Method according to claim 7, characterized in that a humidifiction with a sugar solution is performed prior to the post-drying.

9. Fast-cooking granular rice product as obtained by the method according to one of the preceding claims.

## Revendications

1. Procédé de fabrication d'un produit de riz, granulaire, qui cuit rapidement, à partir d'un mélange contenant du riz brisé, caractérisé en ce que l'on prépare le mélange constitué du riz brisé et des constituants du riz rencontrés en tant que produit secondaire au cours du traitement du riz brut, à savoir farine de décorticage, farine de remoulage et farine de polissage, avec une teneur en humidité moyenne de 8 à 14% en poids et un rapport de mélange correspondant au riz brut quant à ses substances de valeur, en ce que l'on mélange intimement ce mélange à 12 à 24% en poids d'eau et en ce que l'on envoie le mélange à travers une extrudeuse à une seule vis en vue de l'hydrolyse et de la gélification partielles, extrudeuse dont la température de la chemise est réglée à des valeurs comprises entre 40 et 60°C et dont la compression est de 2:1, où on extrude le mélange à travers une filière à trous multiples présentant un diamètre des trous de 1 à 5 mm et en ce que l'on découpe les boudins séchés obtenus à la longueur souhaitée des granules ou grains.

2. Procédé suivant la revendication 1, caractérisé en ce que l'on utilise un mélange de 100 parties en poids des constituants du produit secondaire d'une teneur en humidité de 11% en poids et on utilise 18 parties en poids d'eau d'une température de 18°C.

3. Procédé suivant la revendication 1 ou 2, caractérisé en ce que l'on ajoute, sous mélange, encore 0,1 à 0,3% en poids de sel et/ou d'épice de curry au mélange et à l'eau.

4. Procédé suivant l'une quelconque des revendications précédentes, caractérisé en ce que l'on maintient la température de la masse à la filière à trous multiples entre 100°C et 110°C.

5. Procédé suivant l'une quelconque des revendications précédentes, caractérisé en ce que l'on utilise une extrudeuse à une seule vis avec une vis d'un diamètre de 90 mm et une longueur de 1500 mm où le volume des spires de la vis se réduit de 100% à 75% dans le premier tiers et à 50% du volume de sortie dans le second et le troisième tiers.

6. Procédé suivant l'une quelconque des revendications précédentes, caractérisé en ce que l'on poursuit le séchage du produit granulaire obtenu jusqu'à une teneur en humidité d'au maximum 6% en poids.

7. Procédé suivant la revendication 6, caractérisé en ce que l'on entreprend une humidification à but visé avant la poursuite du séchage.

8. Procédé suivant la revendication 7, caractérisé en ce que l'on entreprend une humidification avec une solution de sucre avant la poursuite du séchage.

9. Produit de riz granulaire à cuisson rapide, que l'on peut obtenir par mise en oeuvre du procédé suivant l'une quelconque des revendications précédentes.
